Europäisches Patentamt

European Patent Office

Office européen des brevets

(11) Publication number: **0 153 072**
**A1**

## (12) EUROPEAN PATENT APPLICATION

(21) Application number: **85300734.2**

(22) Date of filing: **04.02.85**

(51) Int. Cl.⁴: **H 04 Q 9/08**

(30) Priority: **09.02.84 US 578400**

(43) Date of publication of application: **28.08.85**
**Bulletin 85/35**

(84) Designated Contracting States: **BE CH DE FR GB LI SE**

(71) Applicant: **THE BABCOCK & WILCOX COMPANY,**
**1010 Common Street P.O. Box 60035, New Orleans**
**Louisiana 70160 (US)**

(72) Inventor: **Roberts, Robert C., 2333 Heronhill Place,**
**Lynchburg Virginia (US)**

(74) Representative: **Cotter, Ivan John et al, D. YOUNG &**
**CO. 10 Staple Inn, London WC1V 7RD (GB)**

(54) **Multiplexers and methods of measuring conditions in harsh environments.**

(57) A passive multiplexer for processing a plurality of conditions in a harsh environment comprises a transmission line (12) having a measurable impedance characteristic. A plurality of crystals (31-33) are coupled to the transmission line (12), each crystal having a different resonant frequency. Each crystal (31-33) has a first impedance when excited by its resonant frequency and a second impedance when not excited by its resonant frequency. A switch or other transducer (34-36) is connected to each crystal (31-33) or between each crystal and the transmission line (12) for selectively connecting or disconnecting the crystal, or otherwise influencing the impedance of the crystal in response to each condition of interest in the harsh environment (10). A frequency sweep generator (56) is connected to the transmission line (12) for supplying the line with a range of frequencies within which all of the resonant frequencies lie, so that each of the crystals (31-33) can be excited. A detector (58) is connected to the transmission line (12) for detecting changes in its impedance which results from impedance influence of the crystal (31-33) on the line depending on whether the transducer (34-36) has connected or otherwise effected the crystal and whether the crystal is being excited by its resonant frequency.

ACTORUM AG

1

# MULTIPLEXERS AND METHODS OF MEASURING
## CONDITIONS IN HARSH ENVIRONMENTS

This invention relates to multiplexers and to methods of measuring or sensing a plurality of conditions, particularly in a harsh environment.

In a nuclear plant, tens of thousands of valves, pumps, flows, etc. could be monitored for an improvement in operation and safety. To wire all of these signals through the containment wall to the control room is prohibitively expensive and difficult. Existing multiplexers require a substantial amount of active electronics near the sensors in order to share the multiplex channel in time, frequency, or other known methods of concentration. Multiplexers to withstand the very harsh environment of accidents do not exist. The result is that plants hard wire out the signals that they can afford. This is usually far less than the desirable number. New regulations are requiring more signals in plants where the wires simply do not presently exist.

In order to get a large number of signals from a plant or process facility, a large number of wires are thus usually used, one for each signal. The advantage of multiplexing or carrying several signals on each wire is clear if reasonable cost and reliability objectives can be met. A limited number of multiplexing systems have been installed in industrial environments. As noted above, they use time division or frequency division multiplexing. They are not in widespread use because of high cost and poor reliability when exposed to harsh industrial environments. All known systems now require active electronic components (transistors, integrated circuits, relays, etc.) to convert the inputs (source signals) to the multiplexing signals. These must be located near the sensors where the environment is most severe. The active components limit the temperature range of such systems, and further require protective enclosure and packaging. The reliability of such systems is marginal, particularly at high temperatures, even if military grade components are used.

Efforts to develop high temperature and radiation hardened electronics are underway, but the cost will be high and practical implementations are believed several years away.

According to a first aspect of the invention there is provided a multiplexer for processing a plurality of conditions, the multiplexer comprising:

a transmission line having an impedance characteristic;

a plurality of resonant frequency means each connected to the transmission line and each having a different resonant frequency, each resonant frequency means having a first impedance when excited by its resonant frequency and a second impedance when not excited by its resonant frequency;

a transducer responsive to each condition, each transducer being connected to one of the resonant frequency means for effecting an impedance influence of said one of the resonant frequency means on the transmission line;

a frequency sweep generator connected to the transmission line for supplying to the transmission line a range of frequencies which includes all resonant frequencies of the plurality of resonant frequency means; and

detector means connected to the transmission line for detecting changes in the impedance characteristic thereof which is indicative of each condition.

Such a multiplexer can be considered to be a passive multiplexer in that the resonant frequency means and transducers can be of a passive (rather than active) nature and therefore can be positioned in a harsh environment. The multiplexer is therefore well suited to processing conditions in a harsh environment, though it can also be used in other environments.

A preferred multiplexer embodying the present invention and described in detail hereinbelow is used for processing a plurality of conditions in a harsh environment and has no active components in the harsh environment, having in fact only a minimum of simple, reliable components in this area (input to multiplexer). The multiplexer works by detecting an electrically resonant circuit (a crystal for example) connected along an impedance controlled wire or cable. When an appropriate crystal and coupling device is used, there is very little influence on the cable except near the crystal's resonant frequency when the crystal is connected to the cable. Many crystals each with a different resonant frequency are each connected to the cable by a switch. When the switch is open the crystal has no influence (in fact is not connected), but when the switch is closed it is possible to detect its presence uniquely because of its resonant frequency.

A head-end demultiplexer sweeps or steps through the range of frequencies and by monitoring the impedance or the real and imaging power of the cable, it can detect which crystals are connected (switches closed). A logic section provides appropriate output signals and can maintain a constant output between sweeps such that the logic signal may change state each time the sweep circuit goes through the corresponding frequency detecting presence or absence of the crystal.

The resonant frequency means and the transducers of the preferred multiplexer are passive and positioned within the harsh environment and the frequency sweep generator and detector means are positioned outside the harsh environment with the transmission line extending through a barrier separating the harsh environment from a non-harsh environment.

The preferred multiplexer or signal multiplexing system as so far described handles only digital signal switches, relay contacts, etc., but analog signals also may be multiplexed. A first method is to digitise the analog signal and use as many digital inputs as a desired accuracy requires. A second method uses a tunable resonant circuit such as an L-C circuit. The resonant frequency of this circuit can correspond one-to-one to an analog value. A valve position for example, can be obtained, by using a resonant circuit with a fixed inductor L and a moving plate capacitor C where the primary plate is mechanically connected to a valve stem to be monitored. Other variations on this theme are possible using other tunable resonant circuits. Multiple analog inputs and digital inputs may co-exist on a single multiplex cable so long as there is no overlap in frequencies assigned.

Advantages of the preferred multiplexer over the prior art are numerous. These include the following:

A.    lower cost;

B.    high reliability;

C.    withstands very harsh environments

    a) $-100^{o}C$ to $300^{o}C$

    b) easily protected from corrosion, liquids, etc.

    c) withstands high nuclear radiation

    d) withstands high radio frequency interference (RFI) and electromagnetic interference EMI;

D.    analog and digital inputs may co-exist in the same system;

E.    no active parts to fail or maintain in the harsh environment (low cost of ownership and low personnel exposure to radiation, etc);

F.    failures easily detected

a) open or shorted cable is detected

b) dual crystal configuration provides for crystal or switch failure detection;

G.    inputs may easily be electrically isolated;

H.    single input failure does not disable system; and

I.    allows for taps to cables for inputs at any location.

The preferred multiplexer is simple in design, rugged in construction and economical to manufacture.

According to a second aspect of the invention there is provided a method of measuring a plurality of conditions in a harsh environment, the method comprising:

extending a transmission line in the harsh environment;

connecting to the transmission line a plurality of resonant frequency means each having a separate resonant frequency and changing impedance when excited by its resonant frequency;

regulating an impedance influence of each resonant frequency means on the transmission line in response to each of the conditions, respectively;

sweeping the transmission line with a range of frequencies which includes all of the resonant frequencies; and

detecting the impedance characteristic of the transmission line, which changes with changes in the conditions, as an indication of the conditions.

The invention will now be further described, by way of illustrative and non-limiting example, with reference to the accompanying drawings, in which like references designate like parts throughout, and in which:

Figure 1 is a schematic representation of a passive multiplexer embodying the invention;

Figure 2 is a schematic representation of a simplified setup for practicing the invention;

Figure 3 is a schematic representation of an alternative form of implementation of resonant frequency means to be used in a multiplexer embodying the invention;

Figure 4 is a view similar to Figure 3 of another form of implementation of the resonant frequency means;

Figure 5 is a graph showing the effect of changing frequency on impedance for piezoelectric crystals that can be used in the resonant frequency means of a multiplexer embodying the invention; and

Figure 6 is a graph showing the effect of frequency change on impedance phase in a transmission line used in a multiplexer embodying the invention.

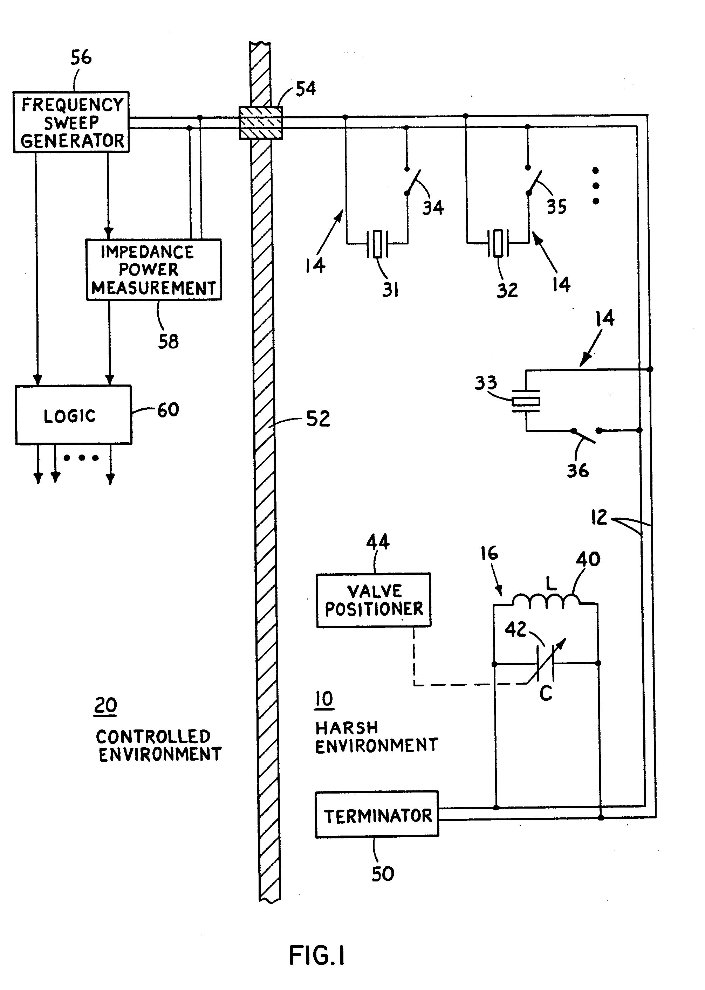

Figure 1 shows a passive multiplexer utilising passive elements in a harsh environment 10 with more sensitive portions of the multiplexer being disposed in a controlled environment 20.

The passive multiplexer comprises a transmission line 12 having measurable impedance characteristics. A plurality of resonant frequency means 14 and 16 are coupled to the transmission line 12 at spaced locations thereon.

Each of the resonant frequency means 14 comprises a piezoelectric crystal 31, 32, 33 in a circuit with a switch 34, 35, 36. Each crystal 31, 32, 33 has a different resonant frequency. Each switch 34, 35, 36 acts as a transducer and is connected to an element or sensor of interest which is responsive to one of a plurality of conditions in the harsh environment 10. One switch 34 may, for example, be connected to a valve for closing the switch when the valve is closed and opening the switch when the valve is open. Signals provided by the resonant frequency means 14 are of a digital nature.

Each piezoelectric crystal 31, 32, 33 has a different resonant frequency. When excited by its resonant frequency, each crystal displays a different impedance than when it is not excited. This impedance will influence the overall impedance of the transmission line 12 when one of the switches 34, 35 and 36 is closed.

Another form of the resonant frequency, namely that means shown at 16, includes an L-C circuit having a coil 40 of fixed inductance and a capacitor 42 of variable capacitance. An arm for varying the capacitance of the capacitor 42 can be mechanically connected to a valve schematically represented at 44 which, depending on valve position, changes the capacitance of the capacitor 42. The impedance influence of the resonant frequency means 16 on the line 12 thus also changes.

The line 12 is provided with a terminator 50 so that its impedance characteristic is fixed and variations thereof can be measured.

The transmission line 12 passes through a separating wall 52 between the harsh and controlled environments 10, 20 through a passage 54. A frequency sweep generator 56 is provided in the controlled environment and is connected to the line 12 to provide a sweeping frequency on the line. The sweeping frequency is in a range containing all of the resonant frequencies of the crystals 31, 32 and 33 as well as the resonant frequency of the L-C circuit in the resonant frequency means 16. The frequency sweep generator 56 may be operative to sweep said range continuously or may comprise a stepped frequency generator for generating discrete frequencies corresponding to each of the resonant frequencies of the resonant frequency means.

An impedance measuring or power measuring device 58 (of known design) is connected both to the frequency sweep generator 56 and the line 12. Demultiplexing logic 60 is connected to the measuring apparatus 58 and the frequency sweep generator 56 for providing a plurality of outputs each representing one of the conditions measured in the harsh environment 10. The measuring device 58 and demultiplexing logic 60 may, as shown, be disposed in the controlled environment 20.

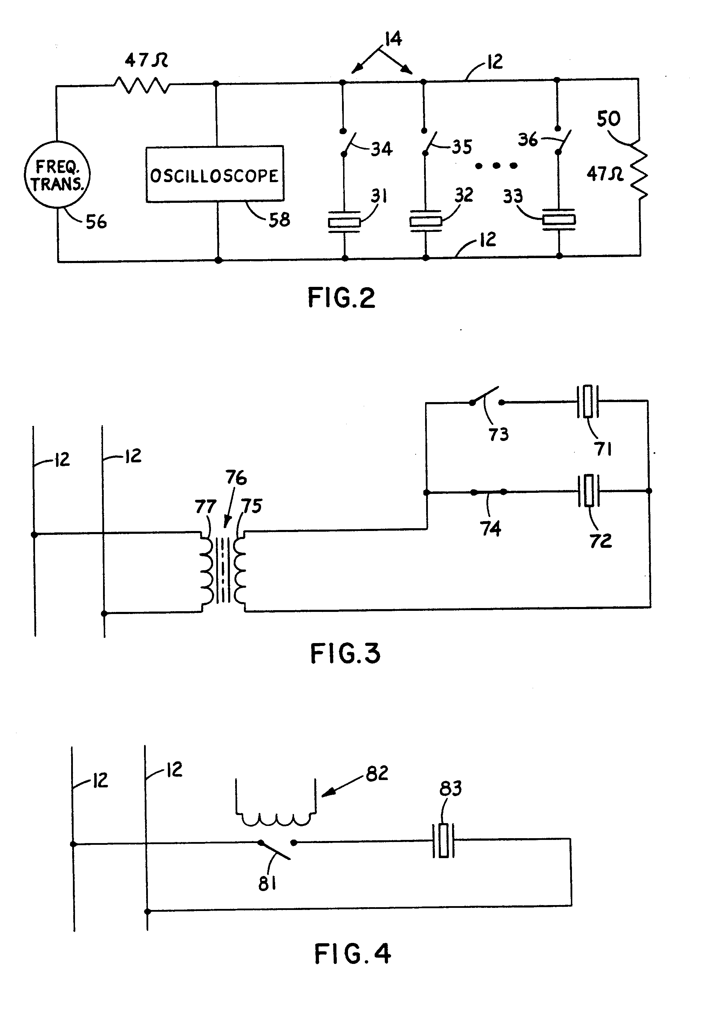

A more specific and simplified version of the passive multiplexer is shown in Figure 2.

The sweep generator 56 comprises, for example, a frequency transmitter such as the Tektronix model FG-504 sweep generator. The measuring arrangement 58 is in the form of an oscilloscope such as the Tektronix model 7834 oscilloscope.

In the embodiment of Figure 2 the transmission line 12 was chosen to be a 122 meter (400 ft) RG-8/u coaxial cable. The terminator 50 was formed of a 57 ohm resistor.

The characteristics of the crystals 31, 32 and 33 must be selected carefully.

Quartz crystal was tried, but proved inadequate due to its very high electrical quality factor (Q) (on the order of $10^4$) and its high resonant impedance of about 500 ohms. Since the transmission line 12 has an impedance characteristic of from about 50 to 300 ohms, quartz crystal was deemed inappropriate. A barium titanate crystal was also inappropriate, due to the fact that its resonant frequency was within a wide bandwidth.

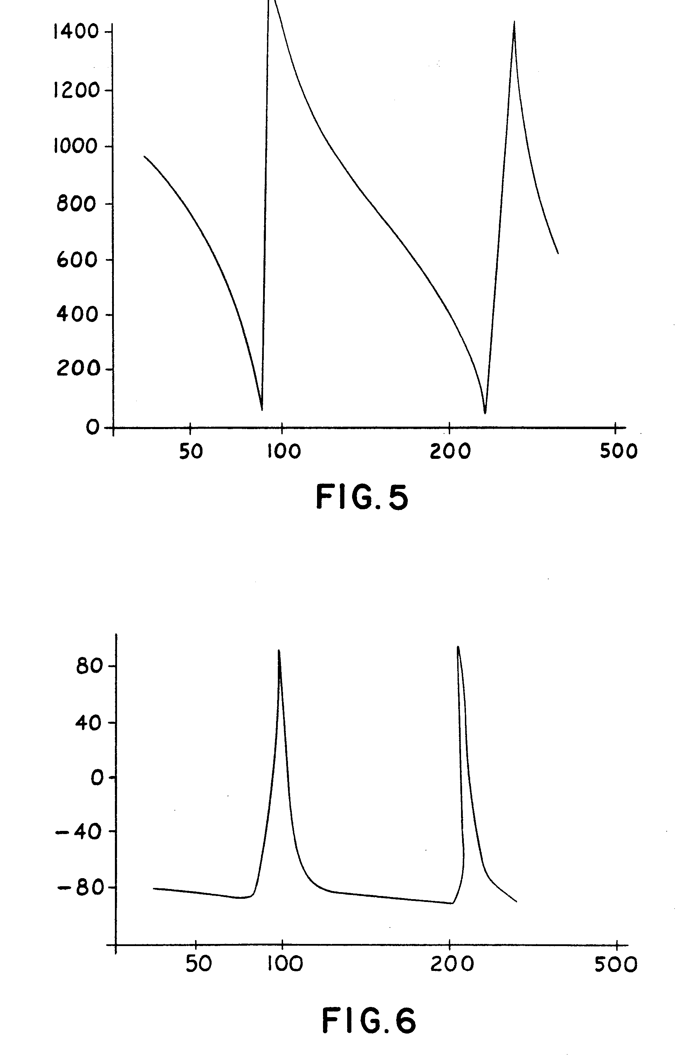

A PZT-4 ceramic material piezoelectric crystal was tried and found satisfactory. These crystals contain lead-zirconate/lead-titanate compositions. The electrical Q of 250 and series resonant impedance of about 15 ohms, with an off-resonant impedance that is suitably higher than 50 ohms, was appropriate for present purposes. As shown in Figure 5, which is a graphical representation of the impedance (ohms)/frequency (kHz) characteristic of the PZT-4 crystal, the PZT-4 crystal had a fundamental resonant frequency at around 90 kHz with a first overtone frequency at about 230 kHz. The ceramic material operates at a temperature above $250^{o}C$ without suffering permanent loss of its piezoelectric properties, although the resonant frequency will shift by about 5 kHz at this temperature.

The resonant frequency of several crystals was modified by drilling holes within the crystal, each of which had a 25.4 mm (1 in) diameter and a 2.54 mm (0.1 in) thickness.

It was found that a separation of 10 kHz could be obtained when operated at a first overtone frequency (approximately 2.3 times the fundamental frequency).

Another method of measuring the impedance on the transmission line 12 in Figure 2 is shown in Figure 6 where a phase variation in the impedance is plotted against the frequency sweep applied to the transmission line 12.

Figure 3 shows an alternative form of the frequency response means which utilises two crystals 71 and 72 each connected to a switch 73 and a switch 74. A parallel connection is established with a secondary coil 75 of a transformer 76. A primary coil 77 of the transformer 76 is connected across the transmission line 12. The switch 73 is normally closed and the switch 74 is normally open. This arrangement for the resonant frequency means provides a high reliability digital input to the impedance detector connected to the line 12.

Figure 4 shows another embodiment for the resonant frequency means wherein a switch 81 is included in a reed relay 82. The position of the relay 82 is measured using a crystal 83 as with the previous embodiments.

The location of the resonant frequency means on the transmission line 12 must also be considered. It was found useful to connect the crystals near the end of the transmission line.

It is to be noted that structures other than crystals and L-C circuits can be provided as long as the structure has a different impedance characteristic within a narrow harmonic or resonant frequency range. The range is desirably narrow so that a large number of conditions can be measured. Twenty crystals or other resonant frequency means can be connected along the line 12 to measure twenty conditions using one line. This of course drastically reduces the number of access ports 54 which must be provided through a separating wall 52 which separates a harsh or hostile environment from an ambient or controlled environment.

Other detectors, which are capable of measuring voltage, current or power on the line 12 due to variations in its impedance, can be utilised for the measuring arrangement 58.

A multiplexer embodying the invention may advantageously be used for example in the containment building of a nuclear reactor with the switches 31, 32 or 33 connected to a control rod or control rod level indicator. This transducer connection can also be provided to valves, flowmeters or other indicators within the harsh environment for indicating a variety of conditions.

CLAIMS

1.    A multiplexer for processing a plurality of conditions, the multiplexer comprising:

a transmission line (12) having an impedance characteristic;

a plurality of resonant frequency means (14, 16) each connected to the transmission line and each having a different resonant frequency, each resonant frequency means having a first impedance when excited by its resonant frequency and a second impedance when not excited by its resonant frequency;

a transducer responsive to each condition, each transducer being connected to one of the resonant frequency means (14, 16) for effecting an impedance influence of said one of the resonant frequency means on the transmission line (12);

a frequency sweep generator (56) connected to the transmission line (12) for supplying to the transmission line a range of frequencies which includes all resonant frequencies of the plurality of resonant frequency means (14, 16); and

detector means (58) connected to the transmission line for detecting changes in the impedance characteristic thereof which is indicative of each condition.

2.    A multiplexer according to claim 1, wherein at least one of the resonant frequency means (14) comprises a piezoelectric crystal (e.g. 31) connected across the transmission line (12), the transducer comprising a switch (e.g. 34) connected between the piezoelectric crystal (e.g. 31) and the transmission line (12) for connecting and disconnecting the piezoelectric crystal to the transmission line in response to one of the conditions.

3.    A multiplexer according to claim 1 or claim 2, wherein at least one of the resonant frequency means comprises an L-C circuit.

4.    A multiplexer according to claim 3, wherein the L-C circuit includes a capacitor (42) having variable capacitance and the transducer (44) is connected to the capacitor for varying its capacitance.

5.    A multiplexer according to any one of claims 1 to 4, wherein the frequency sweep generator (56) comprises a continuous sweep generator for sweeping continuously over said range of frequencies.

6.    A multiplexer according to any one of claims 1 to 4, wherein the frequency sweep generator (56) comprises a stepped frequency generator for generating discrete frequencies corresponding to each of the resonant frequencies of the plurality of resonant frequency means.

7.    A multiplexer according to any one of the preceding claims, including a terminator (50) connected to an end of the transmission line remote from the frequency sweep generator (56).

8.    A multiplexer according to claim 7, wherein the terminator (50) comprises a resistor.

9.    A multiplexer according to any one of the preceding claims, wherein at least one of the resonant frequency means comprises a transformer (76) having a primary coil (77) connected across the transmission line (12) and a secondary coil (75), and first and second crystals (71, 72) connected parallel to the secondary coil (75), and wherein the transducer comprises a first normally closed switch (73) connected in series with the first crystal (71) and a second normally open switch (74) connected in series with the second crystal (72).

10.    A multiplexer according to any one of the preceding claims, wherein at least one of the resonant frequency means comprises a piezoelectric crystal (83) connected across the transmission line (12), the transducer comprising a switch (81) connected in series with the piezoelectric crystal (83) for selectively connecting and disconnecting the crystal from the transmission line (12) and a coil (82) associated with the switch (81) and activatable to change a position of the switch, the switch (81) and the coil (82) being incorporated into a relay for measuring one of the conditions.

11.    A method of measuring a plurality of conditions in a harsh environment, the method comprising:

extending a transmission line (12) in the harsh environment (10);

connecting to the transmission line (12) a plurality of resonant frequency means (14, 16) each having a separate resonant frequency and changing impedance when excited by its resonant frequency;

regulating an impedance influence of each resonant frequency means (14, 16) on the transmission line in response to each of the conditions, respectively;

sweeping (56) the transmission line with a range of frequencies which includes all of the resonant frequencies; and

detecting (58) the impedance characteristic of the transmission line, which changes with changes in the conditions, as an indication of the conditions.

0153072

FIG.1

FIG.2

FIG.3

FIG.4

0153072

FIG.5

FIG.6

European Patent
Office

**EUROPEAN SEARCH REPORT**

0153072
. Application number

EP  85 30 0734

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 719 928  (HIROSHI DISHI)<br><br>* Whole document * | 1,3,5,<br>11 | H 04 Q    9/08 |
| Y |  | 2,4,6,<br>10 |  |
| Y | US-A-3 550 090  (BAKER)<br>*  Column  2, line 52 - column 6,<br>line 38; figure 1 * | 2,6,10 |  |
| Y | GB-A-2 033 634  (THE FOXBORO<br>COMPANY)<br>* Claims 1,2; figures 1,3 * | 4 |  |
| X | DE-A-2 426 314  (LICENTIA)<br>* Whole document * | 1,5,11 |  |

TECHNICAL FIELDS
SEARCHED (Int. Cl.4)

H 04 Q
G 08 C

The present search report has been drawn up for all claims

| Place of search<br>THE HAGUE | Date of completion of the search<br>10-04-1985 | Examiner<br>WANZEELE R.J. |
|---|---|---|

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503. 03.82